# EUROPEAN PATENT SPECIFICATION

(11) **EP 2 690 557 B1**
(45) Date of publication and mention of the grant of the patent: **13.05.2015**
(21) Application number: 11861693.7
(22) Date of filing: 23.03.2011
(51) Int. Cl.: G06F 11/18, G06F 11/16

(54) **COMPUTER SYSTEM, DATA PROCESSING METHOD, AND DATA PROCESSING PROGRAM**
COMPUTERSYSTEM, DATENVERARBEITUNGSVERFAHREN UND DATENVERARBEITUNGSPROGRAMM
SYSTÈME INFORMATIQUE, PROCÉDÉ DE TRAITEMENT DE DONNÉES ET PROGRAMME DE TRAITEMENT DE DONNÉES

(43) Date of publication of application: 29.01.2014
(73) Proprietor: Hitachi, Ltd., Tokyo 100-8280 (JP)
(72) Inventor: TAKADA, Aritoki, Chiyoda-ku, Tokyo 100-8220 (JP)
(74) Representative: Moore, Graeme Patrick
(86) International application number: PCT/JP2011/056972
(87) International publication number: WO 2012/127652

(56) References cited:
- JP-A- 7 306 794
- JP-A- 2003 067 214
- JP-A- 2003 140 704
- JP-A- 2004 046 356
- JP-A- 2005 196 763
- JP-A- 2009 217 503
- US-A1- 2004 205 377
- US-A1- 2004 255 185

## Description

### [Technical Field]

The present invention relates to computer system technology, and more particularly to technology for a fault tolerant system.

### [Background Art]

A computer system that is designed to continue operating when a problem occurs in a portion of the system without the entire system crashing is called a fault tolerant system (hereinafter referred to as "FT system") (Patent Literature 1). The FT system is generally configured using multiple computers, and heightens fault tolerance by making the computers perform the same operations.

As a technique for realizing an FT system, there is "lock-step". In "lock-step", information is exchanged between the respective computers at each operational step. This makes it possible to synchronize the operational steps of the respective computers.

As another technique for realizing an FT system, there is "virtual-machine synchronization". In "virtual-machine synchronization", an operating system (hereinafter referred to as "OS") is executed on one virtual computer. Access information for a virtual device on the one virtual machine is transferred from this OS to another virtual machine. In accordance with this, the respective virtual machines operate exactly the same (Patent Literature 2).

As yet another technique for realizing an FT system, there is "task-synchronization". In "task-synchronization", application software (hereinafter referred to as "application") is partitioned into units called tasks (for example, processes or threads). Then, the same task is synchronously executed on the respective computers (Patent Literature 3).

In a case where the output of the respective computers does not match, a technique whereby an output is selected in accordance with a majority decision and outputted to the outside is also known (Patent Literature 1).

### [Citation List]

### [Patent Literature]

[PTL 1]
   Japanese Patent Application Publication No. H8-314744
[PTL 2]
   US Patent No. 2010/0107158
[PTL 3]
   Japanese Patent Application Publication No. 2009-217503

Document US2004/205377 A1 discloses a fault tolerant multi-node computing system for parallel-running a program under different environments. The processing nodes are connected via a communication channel to a management node. The management node has the function of setting the processing nodes in uniquely different configurations and operating the processing nodes in parallel to execute common application programs in parallel, so that the application programs are run under diversified environments.

### [Summary of Invention]

### [Technical Problem]

"Lock-step" is required for synchronizing the operational steps of respective processors. Therefore, dedicated hardware must be used to observe and control the operational steps of the respective processors. However, the processor has become highly integrated in recent years, and the functions of peripheral chips are also being built into the processor. It is impossible to observe and control the operational steps of a processor having such a complicated configuration. "Lock-step" must carry out synchronization processing for every operational step of the processor, resulting in high synchronization processing overhead for a processor with a high clock rate.

"Virtual-machine synchronization" is problematic when a virtual machine comprises multiple virtual processors. For example, the operational-step relationship between the respective virtual processors in the one virtual machine must match up perfectly with the operational-step relationship between the other respective virtual processors in the other virtual machine. However, it is not possible to match these relationships up perfectly.

"Task-synchronization" is problematic when the computer comprises multiple processors. For example, it is supposed that a task A is executed by a first processor and a task B is executed by a second processor in each computer. Then, it is supposed that the execution timing of task A in the one computer is faster than the execution timing of task A in the other computer. In accordance with this, in the one computer, task A writes data to a memory, and thereafter, task B reads the data from the memory. By contrast, in the other computer, task B reads data from a memory prior to task A writing data to the memory. Therefore, the execution result for task B differs between the one computer and the other computer, thereby raising fears that the outputs will differ for the computers.

Consequently, an object of the present invention is to provide a computer system that makes it possible to synchronously execute multiple tasks using multiple computers.

### [Solution to Problem]

A computer system according to an embodiment of the present invention is a computer system in which multiple computer nodes are connected via a communication network, wherein one of the multiple computer nodes becomes a leader computer node, other computer nodes other than the above-mentioned leader computer node of the multiple computer nodes become follower computer nodes, and the leader computer node and the follower computer nodes each execute the same task. The leader computer node and the follower computer nodes each comprise a communication interface part for communicating with other computer nodes via the communications network, a storage part for storing data, an access execution part for executing an access request to the storage part from a task, and an output determination part for determining whether or not output data is correct in a case where the access request is output to a terminal. The leader computer node, in an external access execution part of its own node, creates a first output data on the basis of a first access request requested from a first task, and, in the output determination part of its own node, queries the follower computer nodes as to whether or not the first output data is correct, and upon obtaining a response to the effect that the first output data is correct from a prescribed number of the follower computer nodes, determines that the first output data is correct. The follower computer nodes, in the external access execution part of its own node, create a second output data on the basis of a second access request requested from a second task that is performing the same processing as the first task, and, in the output determination part of its own node, receive the query from the leader computer node, determine whether or not the first output data and the second output data are the same result, and in a case where the determination result is affirmative, send a response to the effect that the first output data is correct to the leader computer node

These objects are solved in advantageous manner basically by applying the features laid down in independent claims 1, 6 and 7.

Further enhancements are provided by the subclaims.

This makes it possible to realize a computer system that enables multiple tasks to be synchronously executed on multiple computer nodes.

### [Brief Description of Drawings]

[Fig. 1]

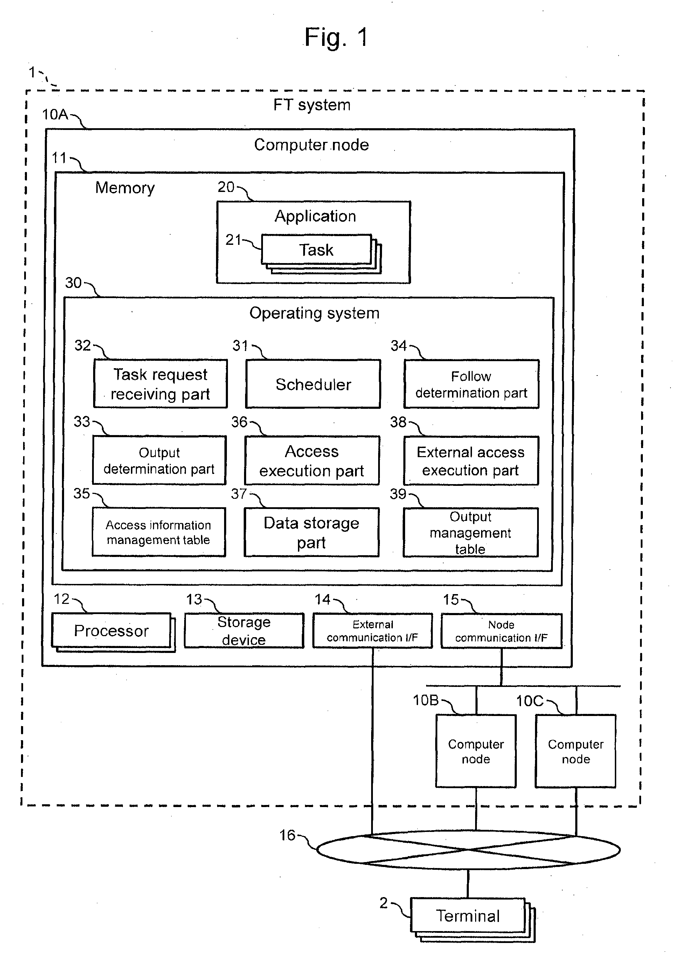

   Fig. 1 is a drawing showing an example of the configuration of an FT system related to Embodiment 1.
[Fig. 2]

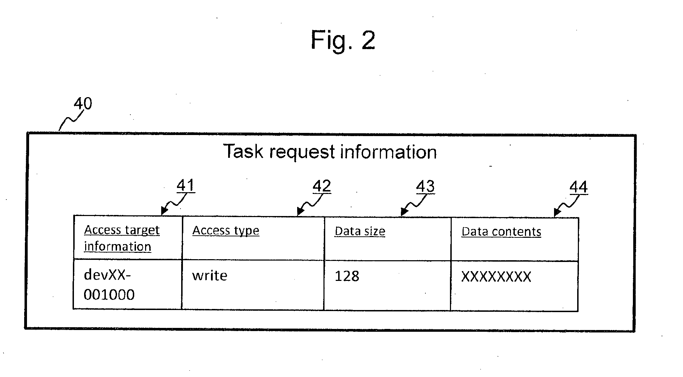

   Fig. 2 is a drawing showing an example of the data structure of task request information.
[Fig. 3]

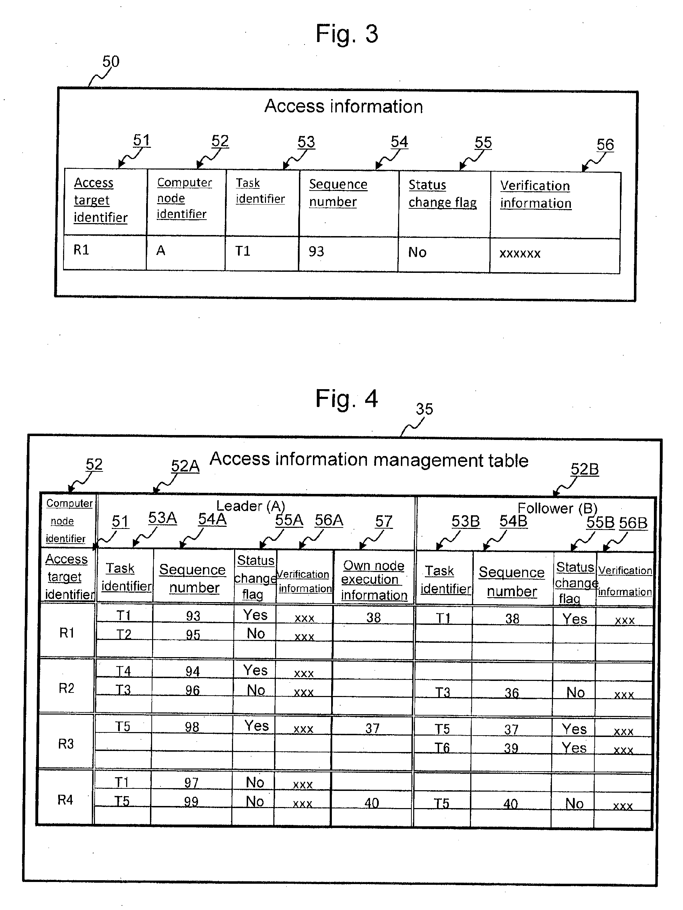

   Fig. 3 is a drawing showing an example of the data structure of access information.
[Fig. 4]
   Fig. 4 is a drawing showing an example of the data structure of an access information management table.
[Fig. 5]

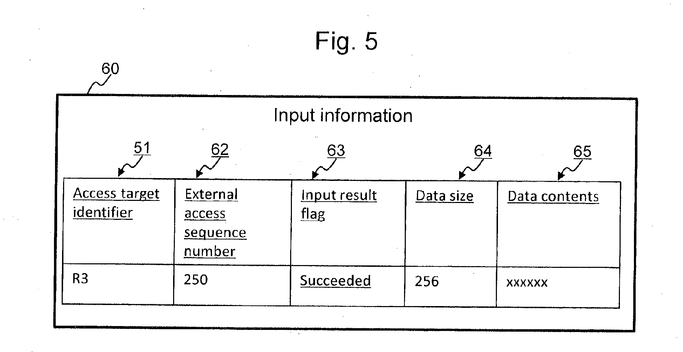

   Fig. 5 is a drawing showing an example of the data structure of input information.
[Fig. 6]

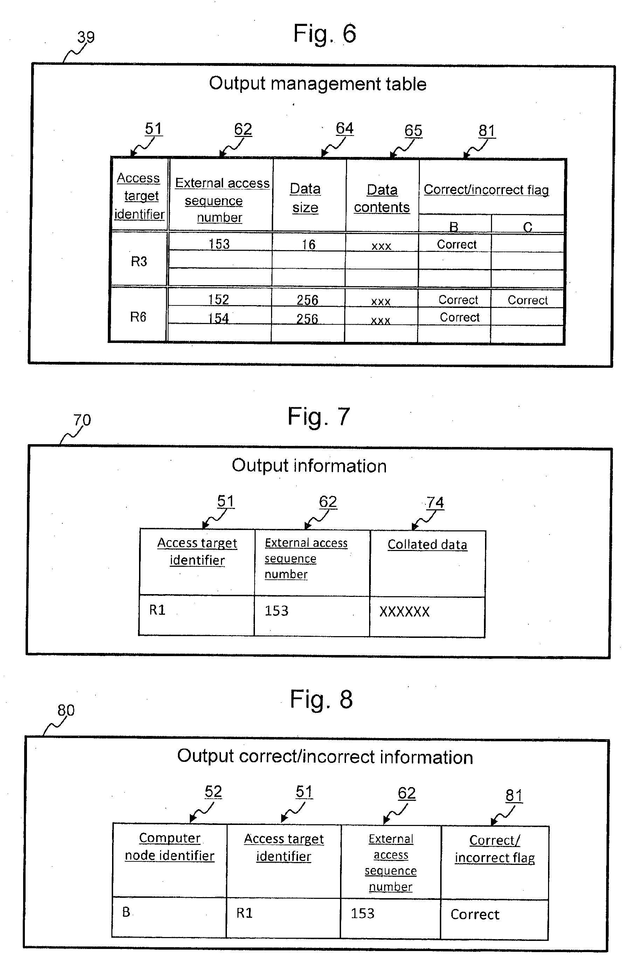

   Fig. 6 is a drawing showing an example of the data structure of an output management table.
[Fig. 7]
   Fig. 7 is a drawing showing an example of the data structure of output information.
[Fig. 8]
   Fig. 8 is a drawing showing an example of the data structure of output correctness information.
[Fig. 9]

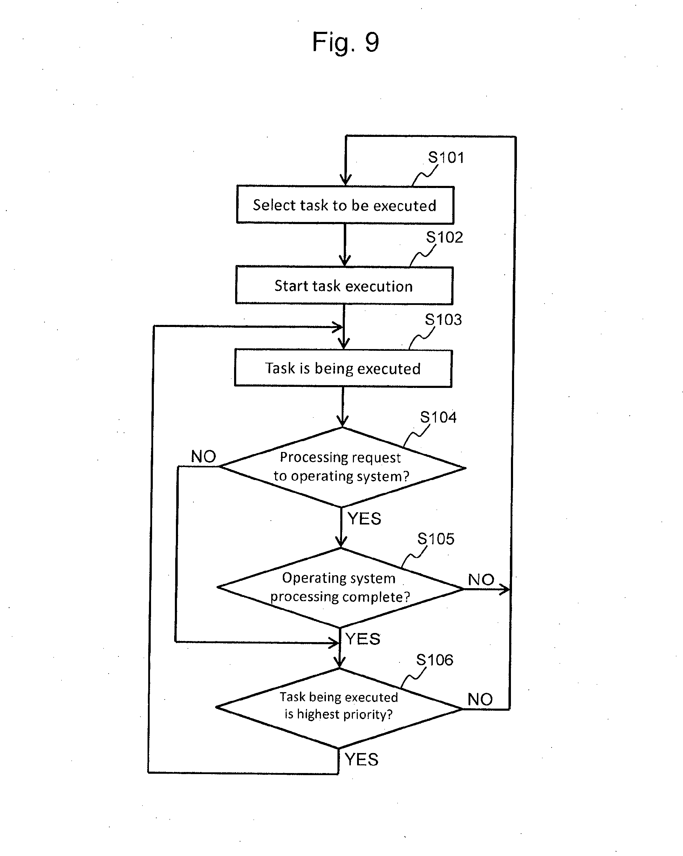

   Fig. 9 is an example of a flowchart when a task is being executed.
[Fig. 10]

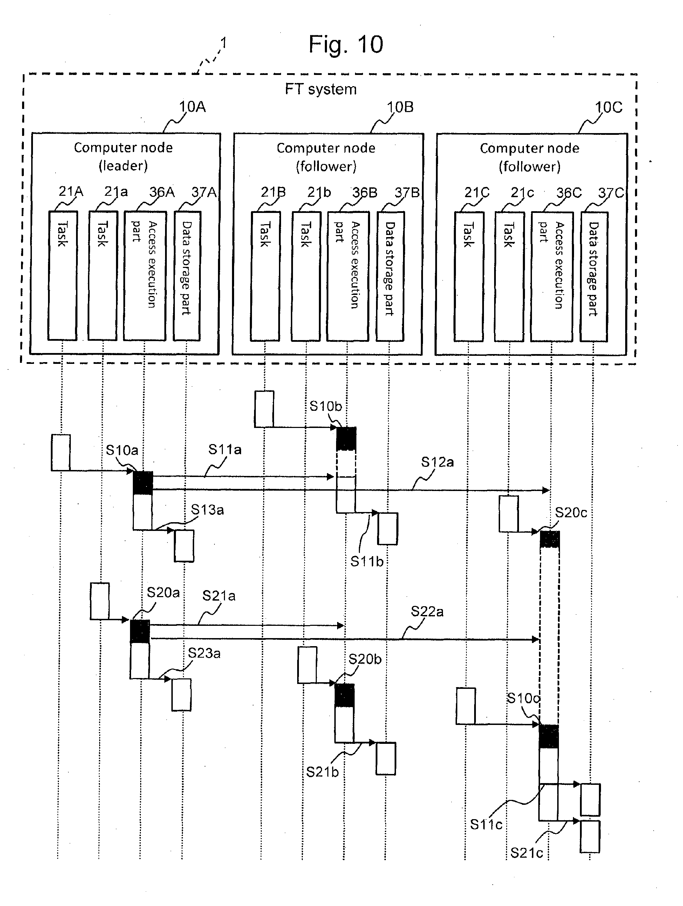

   Fig. 10 is an example of a drawing showing a sequence when the tasks of the respective computer nodes access the data storage part via the access execution part.
[Fig. 11]

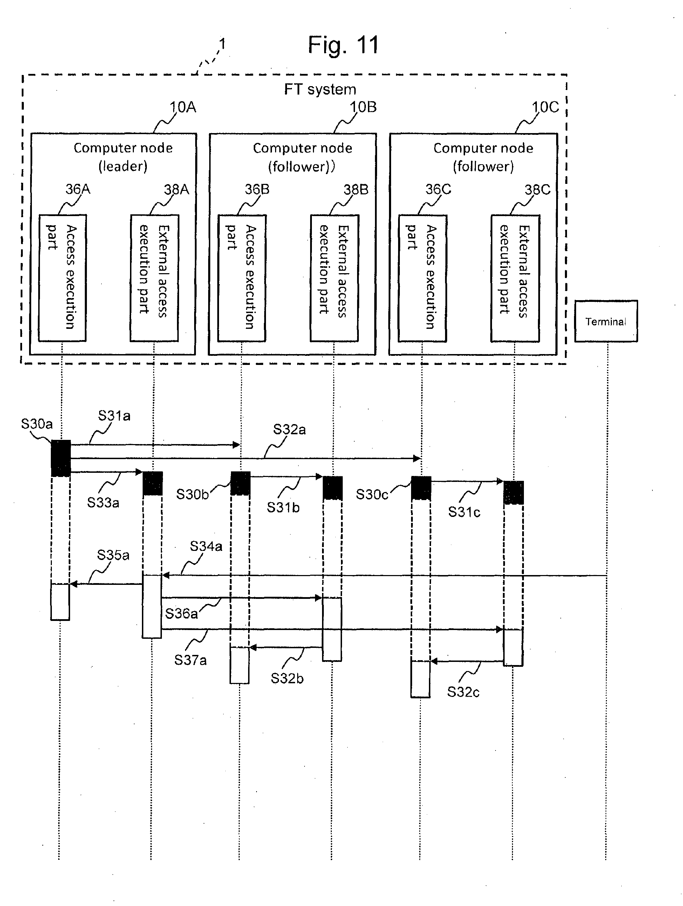

   Fig. 11 is an example of a drawing showing the sequence when the computer node that is the leader receives data from an external terminal.
[Fig. 12]

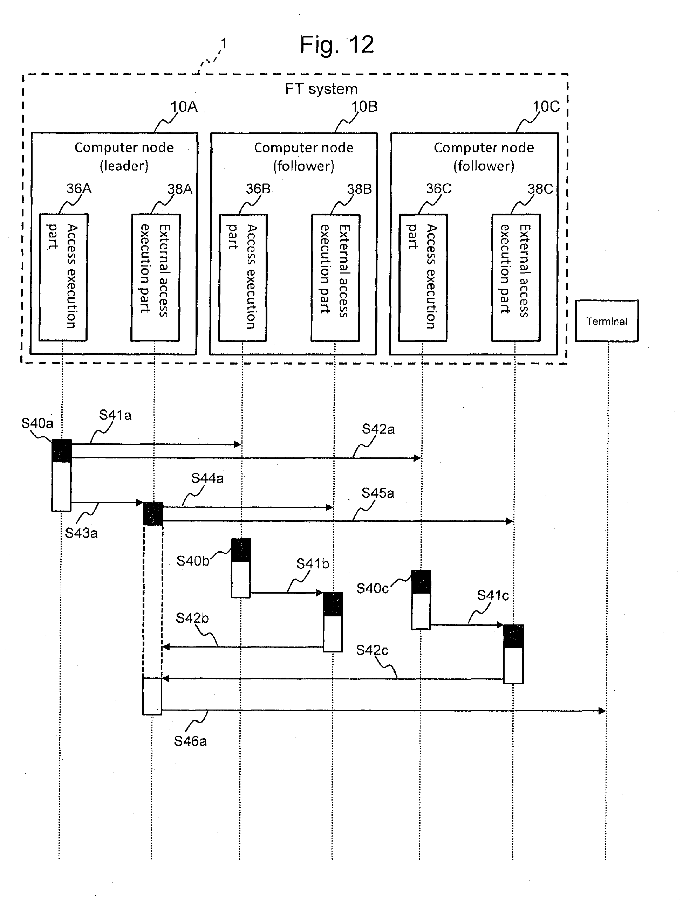

   Fig. 12 is an example of a drawing showing the sequence when the computer node that is the leader sends data to an external terminal.
[Fig. 13]

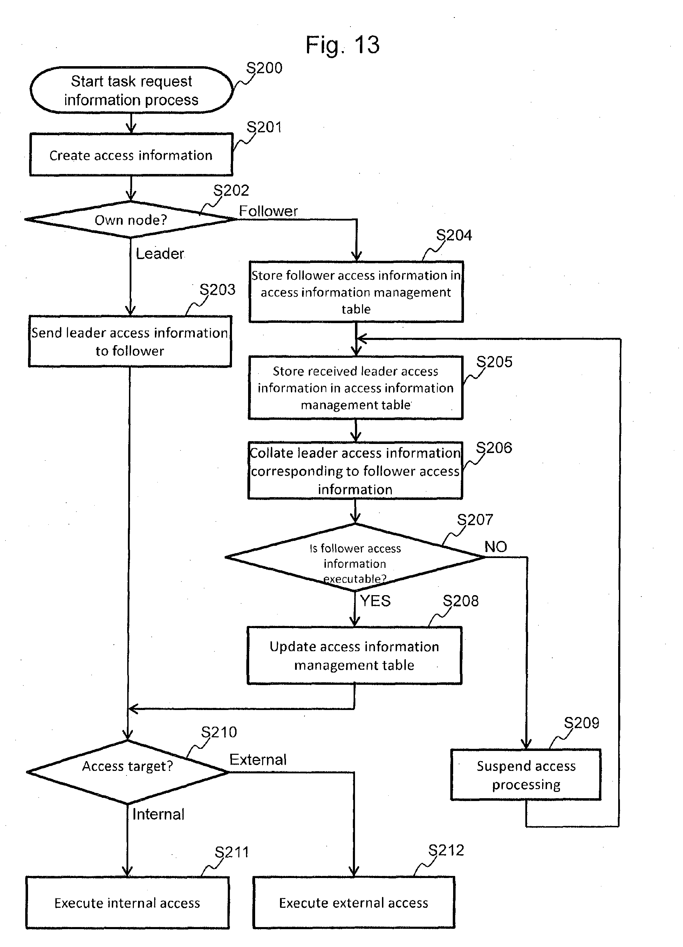

   Fig. 13 is a flowchart showing an example of the processing of the access execution part.
[Fig. 14]

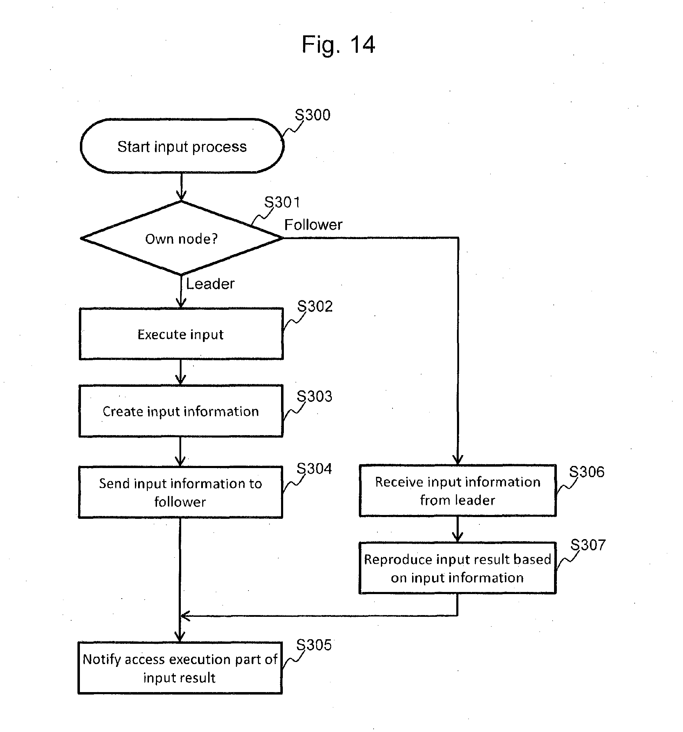

   Fig. 14 is a drawing showing an example of the processing flow for an external access execution part to receive data from an external terminal.
[Fig. 15]

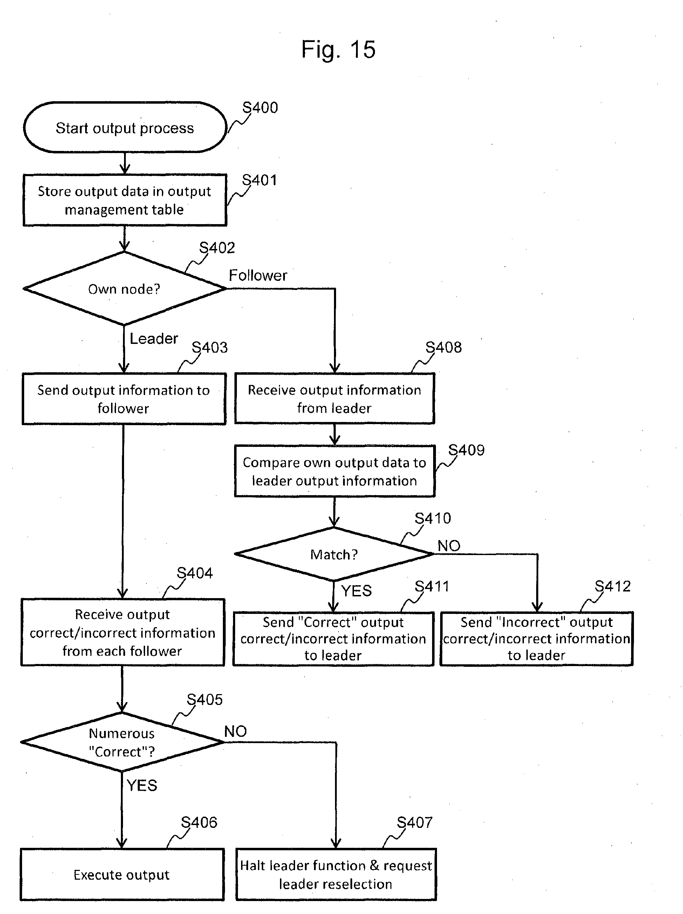

   Fig. 15 is a drawing showing an example of the processing flow for an external access execution part to send data to an external terminal.
[Fig. 16]

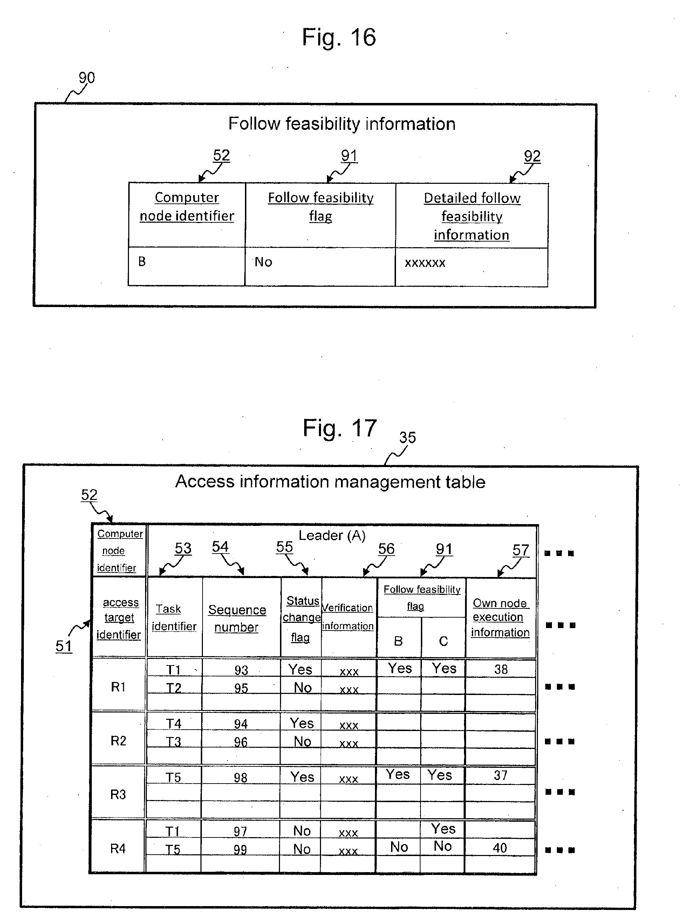

   Fig. 16 is a drawing showing an example of the data structure of follow feasibility information.
[Fig. 17]
   Fig. 17 is a drawing showing an example of an access information management table related to Embodiment 2.
[Fig. 18]

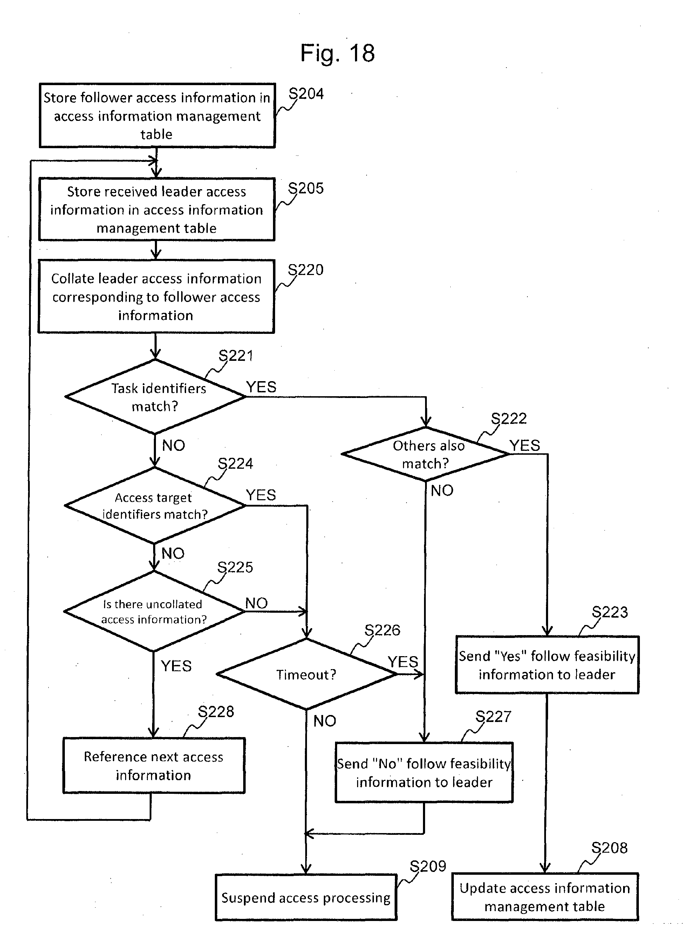

   Fig. 18 is a drawing showing an example of the processing flow of a follower access execution part related to Embodiment 2.
[Fig. 19]

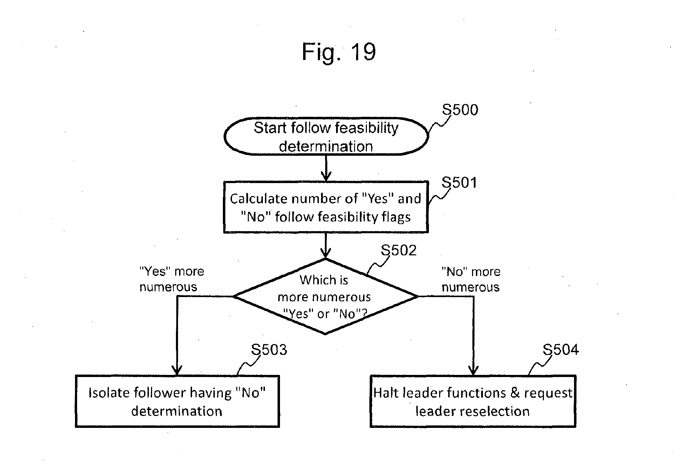

   Fig. 19 is a drawing showing an example of the processing flow for isolating a computer node that is likely to fail from the FT system.
[Fig. 20]

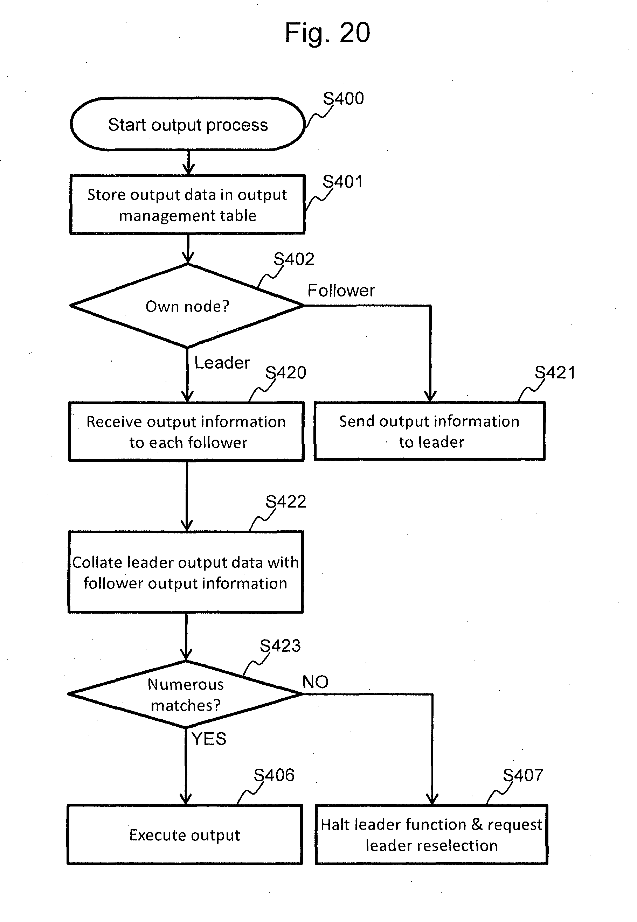

   Fig. 20 is a drawing showing an example of the processing flow of an external access execution part related to Embodiment 3.
[Fig. 21]

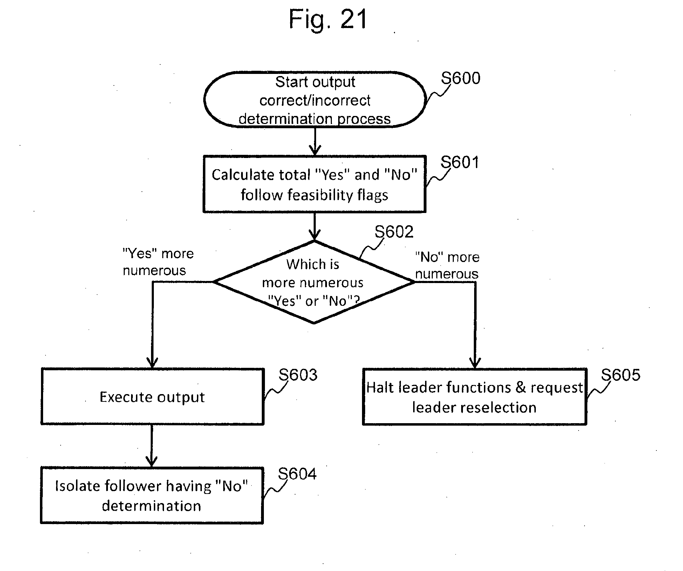

   Fig. 21 is a drawing showing an example of the processing flow for determining the correctness of output data of a leader related to Embodiment 4.

### [Description of Embodiments]

### (Embodiment 1)

In this embodiment, as will be described hereinbelow, a computer that is a leader and computers that are followers each execute the same task. The leader computer queries the follower computers with respect to its own task output data. The leader computer determines whether an output is good or bad by comparing the output data of the follower computers to the task execution result.

Fig. 1 is a drawing showing an example of the configuration of an FT system 1. The FT system 1 comprises multiple (for example three) computer nodes 10A, 10B, and 10C. The number of computer nodes is not limited to three; there may be either two or four or more.

The FT system 1 regards one of the computer nodes 10 comprising the FT system 1 as the leader, and regards the other computer nodes 10 as followers. The FT system 1, during normal operation, does not switch the leader computer node 10 with a follower computer node 10. However, for example, when there is the likelihood that a failure of some sort has occurred in the leader computer node 10, one of the follower computer nodes 10 becomes the new leader, and the FT system 1 continues processing. In addition, a computer node 10 for which there is the likelihood that a failure of some sort has occurred is isolated from the FT system 1. In accordance with this, an FT system 1 having high fault tolerance is realized. Furthermore, in this embodiment, the computer node 10A is regarded as the leader, and the computer nodes 10B and 10C are regarded as the followers. Hereinbelow, the computer node 10A will be abbreviated as "leader 10A", and the computer nodes 10B and 10C will be abbreviated as "follower 10B" and "follower 10C", respectively. There may be cases where the follower 10B and the follower 10C are collectively referred to as "follower 10".

The FT system 1, for example, is coupled to one or more terminals 2 via a communication network 16 such as local area network (LAN) or the Internet. The FT system 1 sends/receives data to/from a terminal 2. As used here, data, for example, is either a notification of information denoting the state of each terminal 2, or an operation request for the other side.

The computer node 10 comprises a memory 11, one or more processors 12, an external communication interface (hereinafter, referred to as "I/F") 14, and a node communication I/F 15.

The memory 11 is a volatile storage medium capable of reading and writing data, and is accessed from the processor 12. The memory 11, for example, comprises a dynamic random access memory (DRAM) or the like.

The processor 12 reads a program such as an application 20 or an operating system 30 from a storage device 13, deploys the program in memory 11, and executes the program. One computer node 10 may comprise multiple processors 12.

The external communication I/F 14 is for the computer node 10 to send/receive data to/from the terminal 2 via the communication network 16. The node communication I/F 15 is for computer nodes 10 to send/receive data to/from each other. The external communication I/F 14 and the node communication I/F 15 do not necessarily have to be provided individually, and a single I/F may be configured to perform the communications of both the external communication I/F 14 and the node communication I/F 15. The external communication I/F 14 and the node communication I/F 15, for example, comprise I/Fs that conform to the Ethernet (registered trademark) standard.

The storage device 13 is a nonvolatile storage medium capable of storing data, and is accessed from the processor 12 and so forth. Data and various types of programs, such as an application 20 and an operating system 30 executed on the computer node 10, are stored in the storage device 13. The storage device 13, for example, comprises either a hard disk drive (HDD) or a flash memory or the like.

Next, the application 20 and operating system 30 executed by the processor 12 will be explained.

The application 20 is a computer program for realizing a function provided by the FT system 1. The application 20 comprises one or more tasks 21. The task 21 may comprise a unique storage area that is not referenced from either the operating system 30 or another task 21. Each of the computer nodes 10 comprising the FT system 1 has the same application 20. That is, the same application 20 is executed by each of the multiple computer nodes 10 comprising the FT system 1.

The operating system 30 is an OS capable of multitasking, and can execute multiple tasks 21 in parallel. The operation system 30 provides to a task 21 a function for accessing the storage device 13, a function for communicating with the terminal 2 via the external communication I/F 14, and a function for reserving and releasing a prescribed area of the memory 11. The operating system 30, for example, comprises a scheduler 31, a task request receiving part 32, an output determination part 33, a follow determination part 34, an access information management table 35, an access execution part 36, a data storage part 37, an external access execution part 38, and an output management table 39.

Fig. 2 is a drawing showing an example of the data structure of task request information 40. The task request receiving part 32 receives task request information 40 like that shown in Fig. 2 from the task 21, and communicates the contents of the request to the access execution part 36. The request at the time the task 21 accesses the data storage part 37 is described in the task request information 40. For example, as shown in Fig. 2, access target information 41, an access type 42, a data size 43, and data content 44 are described in the task request information 40.

The access target information 41 is for identifying an access target of the task 21 (that is, either a data read destination or a data write destination). For example, the access target information 41 may be an address showing a prescribed storage area in the memory 11, an identifier of a storage device that will become the access target, an identifier showing a prescribed storage area in the storage device, or a combination thereof. When the access target is the terminal 2 on the communication network 16, the access target information 41 may be an IP address and a port number showing the terminal 2, or may be a session identifier for uniquely identifying a combination of an IP address and a port number in the computer node 10.

The access type 42 is information for identifying whether the task request is a data read or write. When the access type 42 is "write", the data size and data content of the write data are respectively described in the data size 43 and the data content 44.

Fig. 3 is a drawing showing an example of the data structure of access information 50. The access execution part 36 creates access information 50 for communicating the task request information 40 to another computer node 10. In addition, the access execution part 36 accesses data in the data storage part 37. As shown in Fig. 3, for example, an access target identifier 51, a computer node identifier 52, a task identifier 53, a sequence number 54, a status change flag 55, and verification information 56 are described in the access information 50.

The access target identifier 51 is uniquely defined from the access target information 41 and the data size 43 of the task request information 40. The access target identifier 51, for example, may be determined from either the access-target storage device name, a storage area name, or the identifier (for example, a hostname or IP address) of the communication-destination apparatus, which is the access target, included in the access target information 41. When the access-target storage area is partitioned into multiple areas, the access target identifier 51 may be determined from the identifier given to each of the partitioned storage areas.

The computer node identifier 52 is for uniquely identifying the computer node 10 that created the access information 50. For example, since the computer node identifier 52 shown in Fig. 3 is "A", it is clear that the access information 50 was created by leader 10A.

The task identifier 53 is for uniquely identifying a task 21, which is the execution agent in the access information 50. For example, since the task identifier 53 shown in Fig. 3 is "T1", it is clear that the access information 50 is executed by task T1.

The sequence number 54 is a value for showing the sequence whereby the access information 50 is executed in its own computer node 10. Basically, the access information 50 is sequentially executed beginning from access information 50 having a small sequence number. For example, since the sequence number 54 shown in Fig. 3 is "93", in essence, the access information 50 is executed starting at a sequence number that is smaller than "93".

The status change flag 55 is information showing whether or not the execution of the access information 50 will change the status of the access target. For example, in the case of a read access that reads data from the data storage part 37, the data in the data storage part 37 does not change, and as such, the status change flag 55 is "No". Alternatively, in the case of a write access that writes data to the data storage part 37, or in the case of an access that sends data to the terminal 2, the status change flag 55 is "Yes".

The verification information 56 describes data for verifying that the task request information 40 transferred from the same task 21 is the same in the respective computer nodes 10. For example, in a case where the task request information 40 is requesting a "write", either the data content 44 of the task request information 40, or error detection reference sign data or the like in the data content 44 is described in the verification information 56.

Fig. 4 is a drawing showing an example of the data structure of the access information management table 35. The access information management table 35 associatively manages leader access information 52A and follower access information 52B. The leader access information 52A is access information that has been sent from the access execution part 36 of the leader 10A. The follower access information 52B is access information that has been created by the access execution part 36 of the follower 10.

The leader access information 52A, for example, comprises a task identifier 53A, a sequence number 54A, a status change flag 55A, verification information 56A, and own node execution information 57. The follower access information 52B comprises a task identifier 53B, a sequence number 54B, a status change flag 55B, and verification information 56B.

The access information management table 35 associatively manages access information 50 created from the same task 21 for the leader 10A and the follower 10B (or follower 10C). For example, Fig. 4 is an example of the access information management table 35 of the follower 10B. It is clear that the corresponding relationship between the leader access information 52A and the follower access information 52B is described in the same row.

The corresponding relationship is determined by whether or not the access target identifier 51 and the task identifier 53A are both the same. For example, in Fig. 4, a corresponding relationship exists between the leader access information 52A and the follower access information 52B for the access target identifier 51 "R1" and the task identifier 53A "T1".

The access information management table 35 manages the leader access information 52A and the follower access information 52B by grouping this information 52A and 52B together under the same access target identifier 51. In addition, the access information management table 35 manages the leader access information 52 by arranging the sequence numbers in ascending order within the access target identifier 51 group.

Information as to whether or not the follower access information 52B described in a relevant row has been executed is described in the own node execution information 57. For example, as shown in Fig. 4, when the execution of the follower access information 52B for sequence number "38" has been completed, this sequence number "38" is described in the own node execution information 57 of the same row. The access execution part 36 is able to learn which follower access information 52B has been executed by referencing the own node execution information 57.

Since the leader access information 52A is arranged with the sequence numbers in ascending order, the follower access information 52B having a corresponding relationship thereto is also arranged in the same order. Thus, the access execution part 36 is able to learn the stage of the sequence up to which the follower access information 52B has been executed by referencing the own node execution information 57.

Fig. 5 is a drawing showing an example of the data structure of input information 60. When the leader 10A attempts to receive data from the terminal 2, the external access execution part 38 creates the input information 60 for communicating the execution result thereof and the content of the data that was received to the follower 10.

As shown in Fig. 5, for example, an access target identifier 51, an external access sequence number 62, an input result flag 63, a data size 64, and data content 65 are described in the input information 60. The external access execution part 38 describes "succeeded" in the input result flag 63 column of the input information 60 when the data was received successfully, and "failed" when this operation was a failure. In a case where the data was received successfully, the external access execution part 38 respectively describes the data size and the data content of the received data in the data size 64 and the data content 65.

The external access execution part 38, when sending data to the terminal 2, stores output information 70, which is shown in Fig. 7, in an output management table 39, which is shown in Fig. 6. For example, as shown in Fig. 7, an access target identifier 51, an external access sequence number 62, and collated data 74 are described in the output information 70. The access target identifier 51 and the external access sequence number 62 are the same as in Fig. 5, and as such, explanations will be omitted. The output data of the leader 10A, for example, is described in the collated data 74.

Fig. 6 is a drawing showing an example of the data structure of the output management table 39. As shown in Fig. 6, for example, an access target identifier 51, an external access sequence number 62, a data size 64, and a data content 65 are described in the output management table 39. A correctness flag 81 for showing the correctness determination of the follower 10 with respect to the output data of the leader 10A is also described in the output management table 39 of the leader 10A. A correctness flag is not included in the output management table 39 of the follower.

Fig. 7 is a drawing showing an example of the data structure of the output information 70. Fig. 8 is a drawing showing an example of the data structure of output correctness information 80.

The output determination part 33 of the leader 10A sends output information 70 to the follower 10 prior to sending prescribed output data described in the output management table 39 to the terminal 2. The output determination part 33 of the leader 10A, as shown in Fig. 8, for example, receives from the follower 10 the output correctness information 80, which is the verification result for the output information 70, and on the basis of this verification result, determines whether or not the above-mentioned prescribed output data is sent to the terminal 2.

Return to Fig. 1. The data storage part 37, on the basis of a request from the access execution part 36, writes data to a prescribed area of either the memory 11 or the storage device 13 and/or reads data from a prescribed area of either the memory 11 or the storage device 13. The data storage part 37 may play the role of a cache memory.

The scheduler 31 controls the execution sequence of the multiple tasks 21. The scheduler 31, for example, switches the task 21 being executed at a prescribed time interval. When a task 21 having a higher priority than a task being executed has been generated, the scheduler 31 executes this higher-priority task 21 first.

The follow determination part 34 determines whether or not either follower 10B or 10C is able to follow the leader 10A. For example, when the output data of the follower 10B differs from the output data of the leader 10A, the follower 10B notifies the leader 10A of information to the effect that following is not possible. When information has been received from a small number of followers showing that following is not possible, the follow determination part 34 of the leader 10A is able to determine that there is the likelihood that some sort of failure has occurred in this small number of followers. Alternatively, when information has been received from a large number of followers showing that following is not possible, the follow determination part 34 of the leader 10A is able to determine that there is the likelihood that some sort of failure has occurred in the leader 10A itself.

Fig. 9 is an example of a flowchart showing the processing whereby a task 21 is executed. The scheduler 31 selects a task 21 to be executed (S101). The scheduler 31 starts the execution of the selected task 21 (S102). When an access request for either the storage device 13 or the terminal 2 has been generated while the task 21 is being executed, the task 21 transfers the task request information 40 to the task request receiving part 32 and requests the execution of the access process (S103).

When the task request receiving part 32 has not received the task request information 40 at this point (S104: NO), the scheduler 31 advances to Step S106.

In a case where the task request receiving part 32 has received the task request information 40 from the task 21 (S104: YES), the scheduler 31 determines whether or not the processing described in the task request information 40 is capable of being completed within a prescribed period of time (S105).

In a case where the scheduler 31 has determined that the processing is able to be completed within the prescribed period of time (S105: YES), the scheduler 31 advances to Step S106.

Alternatively, in a case where the scheduler 31 has determined that the processing is unable to be completed within the prescribed period of time (S105: NO), the scheduler 31 temporarily suspends the processing. Then, the scheduler 31 returns to Step S101, selects and executes another task 21.

In a case in which either the task request receiving part 32 has not received the task request information 40 (S104: NO), or the scheduler 31 has determined that the processing described in the task request information 40 is able to be completed within the prescribed period of time (S105: YES) will be explained. At this time, the scheduler 31 determines whether or not the task 21 currently being executed is the highest priority task (S106).

When the task 21 currently being executed is the highest priority task (S106: YES), the scheduler 31 returns to Step S103 and continues the processing.

When the task 21 currently being executed is not the highest priority task (S106: NO), the scheduler 31 returns to Step S101, selects and executes another task 21. A case where the task 21 currently being executed ceases to be the highest priority task, for example, is either a case in which the continuous execution time of the task 21 currently being executed has become equal to or greater than the prescribed period of time, or a case in which it has become possible to execute a task having a higher priority than the task currently being executed.

In a case where the computer node 10 comprises multiple processors 12, these operations are respectively executed in the processors 12.

The timing at which each processor 12 executes the scheduler 31 is not necessarily the same. Therefore, it is not possible to perfectly match up the operations of the processors 12 between the computer nodes 10 without performing "lock-step" between the computer nodes 10. For example, when the cache operations inside the processors of the respective computer nodes 10 differ, the timing for starting the same task 21 may deviate. Furthermore, when the internal states of the operating systems 30 in the respective compute nodes 10 differ, the task 21 execution results may not match. However, in realizing the FT system 1, the tasks 21 executed in the respective computer nodes 10 are not permitted to create a fatal mismatch of execution results.

A fatal mismatch of execution results, for example, is a case in which despite the fact that the same task 21 was executed by multiple computer nodes 10, the determination arrived at by each computer node 10 differs, resulting in respectively different execution results and different outputs being produced. Consequently, in this embodiment, a fatal mismatch of execution results is not allowed to occur when the same task 21 is executed by multiple computer nodes 10.

Fig. 10 shows an example of the sequence when the tasks 21 of the respective computer nodes 10 access the data storage part 37. In this example, it is supposed that in the leader 10A data incompatibility occurs when task 21a does not access the data storage part 37 after task 21A. The same is also supposed for the followers 10B and 10C.

First of all, the processing of the access execution part 36A based on the task request information 40 of task 21A and task 21a executed by the leader 10A will be explained. The access execution part 36A, which receives a first task request information 40 for the task 21A, creates a first access information 50 corresponding to the first task request information 40 (S10a). The access execution part 36A sends the first access information 50 to the access execution part 36B of the follower 10B and the access execution part 36C of the follower 10C (S11a, S12a). Next, the access execution part 36A accesses prescribed data in the data storage part 37A on the basis of the task request information 40 (S13a).

Thereafter, the access execution part 36A, which receives a second task request information 40 from the task 21a, creates a second access information 50 corresponding to the second task request information 40 (S20a). Subsequent thereto, the access execution part 36A accesses the storage device 13 (S21a through S23a) the same as in the above-mentioned S11a through S13a described for task 21A.

That is, the access execution part 36A being executed by the leader 10A sends access information 50 for executing the same processing to the access execution part 36B of the follower 10B and the access execution part 36C of the follower 10C.

Next, the processing of the access execution part 36B based on task request information 40 of task 21B and task 21b executed in the follower 10B will be explained. Here the access execution part of the follower 10B will be called access execution part 36B, and the data storage part of the follower 10B will be called data storage part 37B. Similarly, the reference signs 36C and 37C will be used in the explanation when explaining this processing with respect to the follower 10C. The access execution part 36B that receives a first task request information 40 from the task 21B starts the processing, but since the access information 50 has not been received from the access execution part 36A of the leader 10A, the access execution part 36B transitions to a standby mode (S10b). The standby mode is shown in Fig. 10 using dotted lines.

The access execution part 36B, upon receiving a first access information 50 from the access execution part 36A (S11a), accesses prescribed data in the data storage part 37B on the basis of task request information 40 corresponding to the first access information 50 (S11b).

Thereafter, the task 21b issues a second task request information 40 to the access execution part 36B. The access execution part 36B has received a second access information 50 from the access execution part 36A of the leader 10A at this time (S21a). Therefore, the access execution part 36B immediately accesses the prescribed data in the data storage part 37B on the basis of task request information 40 corresponding to the second access information 50 (S21b).

Next, the processing of the access execution part 36C based on task request information 40 of task 21C and task 21c executed by the follower 10C will be explained. The task 21C starts the processing. The access execution part 36C, which receives the task request information 40 from the task 21C, has already received the first access information 50 from the access execution part 36A of the leader 10A (S12a), and as such, immediately accesses prescribed data in the data storage part 37C on the basis of the task request information 40 (S11c).

In the meantime, the task 21c starts processing earlier than the task 21C (S20c). However, since the access execution part 36C has not yet received a second access information 50 from the access execution part 36A of the leader 10A, the access execution part 36C transitions to the standby mode.

The access execution part 36C receives a second access information 50 from the access execution part 36A (S22a). However, at this point in time, since the access processing corresponding to the first access information 50 has not been completed yet, the access execution part 36C transitions to the standby mode until the access processing corresponding to the first access information 50 is complete.

After the access processing corresponding to the first access information 50 has been completed, the access execution part 36C accesses the prescribed data in the data storage part 37C on the basis of the task request information 40 (S21c).

According to the above processing, it is possible to make the sequence for each task accessing the data the same in each computer node even in a case where the task boot sequence in the leader 10A does not match the task boot sequence in the follower 10B and the task boot sequence in the follower 10C. That is, it is possible to prevent tasks that are performing the same processing in each computer node from resulting in different execution results.

Fig. 11 is an example of a drawing showing the sequence when the computer node 10A, which is the leader, receives an external access request from an external terminal 2.

First, the processing of the access execution part 36A executed by the leader 10A will be explained. Since Steps S30a through S31a by the access execution part 36A is the same processing as Steps S20a through S21a in Fig. 10, explanations will be omitted.

Next, the access execution part 36A instructs the external access execution part 38A to receive data sent from the terminal 2 (S33a).

The external access execution part 38A, upon receiving the data sent from the terminal 2 (S34a), notifies the access execution part 36A to this effect (S35a). At this time, the external access execution part 38A transfers the input information 60 to the external access execution part 38B of the follower 10B and the external access execution part 38C of the follower 10C (S36a, S37a).

Next, the processing of the access execution part 36B executed by the follower 10B will be explained. The access execution part 36B has already received the access information 50 from the access execution part 36A of the leader 10A at the start of the processing (S31a). Consequently, the access execution part 36B instructs the external access execution part 38B to receive the input information 60 transferred from the external access execution part 38A of the leader 10A (S31b).

The external access execution part 38B, upon receiving the input information 60 from the leader 10A (S36a), notifies the access execution part 36B of the input result flag 63, the data size 64, and the data content 65 included in the input data information 60 (S32b). The access execution part 36C of the follower 10C also performs the same processing as that described hereinabove (S30c through S32c).

As described above, as a representative the leader 10A receives data sent to the FT system 1 from an external terminal 2 or the like, and transfers this data to the followers. Then, the leader 10A, the follower 10B, and the follower 10C each execute the same processing. This makes it possible for the followers to produce the same input results as the leader, and for the tasks using these input results to perform the same operations.

Fig. 12 is an example of a drawing showing the sequence when the computer node 10A, which is the leader, sends data to the terminal 2.

First, the processing of the access execution part 36A executed by the leader 10A will be explained. Since the processing of the access execution part 36A in Steps S40a through S42a is the same as that in Steps S30a through S32a in Fig. 11, explanations will be omitted. The access execution part 36A instructs the external access execution part 38A to send data to the terminal 2 (S43a). The external access execution part 38A describes the data transferred from the access execution part 36A in the output information 70, and transfers the data to each of the follower 10B external access execution part 38B and the follower 10C external access execution part 38C (S44a, S45a). The external access execution part 38A receives from the follower 10B external access execution part 38B and the follower 10C external access execution part 38C output correctness information 80 showing whether or not the leader 10A output data is correct (S42b, S42c). The external access execution part 38A sends the leader 10A data to the terminal 2 upon receiving notifications to the effect that the result is correct from a large number (for example, more than half) of the followers (S46a).

The processing of the access execution part 36B executed by the follower 10B will be explained. The access execution part 36B has already received the access information 50 from the leader 10A access execution part 36A at the start of processing (S40b). Consequently, the access execution part 36B transfers the output data to the external access execution part 38B. The external access execution part 38B compares the output information 70 received from the task 21A of the leader 10A to the output data received from the access execution part 36B. In a case where the output data is a match, the external access execution part 38B describes the information "correct" in the correctness flag 81 of the output correctness information 80 showing in effect that there is a match, and sends this information to the leader 10A external access execution part 38A (S42b). Alternatively, in a case where the output data is not a match, the external access execution part 38B describes the information "incorrect" in the correctness flag 81 of the output correctness information 80 showing in effect that there is not a match, and sends this information to the leader 10A external access execution part 38A (S42b). The task 21C executed by the follower 10C also performs the same processing as above (S40c through S42c).

According to the above processing, it is possible to prevent erroneous output data from being sent to the terminal 2 when the output data of the leader 10A is incorrect due to trouble of some sort or other.

Fig. 13 is a flowchart showing the processing for task request information. The access execution part 36 creates access information 50 on the basis of task request information 40 (S201). The access execution part 36 determines whether the computer node 10 to which it belongs is the leader or a follower (S202). Hereinafter, the computer node to which a part belongs will be called its own node.

The processing in a case where the own node is the leader will be explained (S202: leader). The access execution part 36 sends the access information 50 to the followers 10B and 10C (S203).

The access execution part 36 determines whether the task request information 40 is a request for access to a storage device 13 inside its own node, or a request for access to an external terminal 2 (S210).

A case where the task request information 40 is a request for access to the data storage part 37 inside its own node (S210: Internal), the access execution part 36 accesses the data in the data storage part 37 (S211).

Alternatively, in a case where the task request information 40 is a request for access to the terminal 2 (S210: External), the external access execution part 38 sends/receives the data to/from the terminal 2 (S212).

Next, the processing in a case where the own computer node 10 is a follower will be explained by returning to Step S202 (S202: Follower).

The access execution part 36 stores follower access information 50 created in Step S201 in the access information management table 35 (S204). The access execution part 36 stores leader access information 50 received from the leader 10A in the access information management table 35 (S205). The access execution part 36 collates the corresponding relationship between the follower access information 52B and the leader access information 52A from the access information management table 35 (S206). That is, for example, the access execution part 36 collates the leader access information 52A described in the same row as the follower access information 52B in Fig. 4.

The access execution part 36 determines whether or not the collated follower access information 52B is able to be executed immediately (S207). In a case where all the follower access information 52B, which has a smaller sequence number than the collated follower access information 52B within the group having the same access target identifier 53, has been executed, the access execution part 36 determines that execution is possible immediately. In a case where unexecuted follower access information 52B still exists, the access execution part 36 determines that execution is not possible yet. The access execution part 36 learns whether or not execution is complete by referencing its own node execution information 57.

In a case where all the follower access information 52B has been executed (S207: YES), the access execution part 36 records the sequence number of the follower access information 52B in its own node execution information 57 corresponding to the collated follower access information 52B in the access information management table 35 (S208). The access execution part 36 accesses the prescribed data in the data storage part 37 on the basis of the task request information 40 the same as in Steps S210 through S212 described hereinabove.

Alternatively, when unexecuted follower access information 52B still remains (S207: NO), the access execution part 36 temporarily suspends this access processing (S209) and returns to Step S205.

The access information management table 35 may comprise a status change flag 55. For example, it is supposed that an unexecuted access process having a smaller sequence number than the access process to be executed remains in the access information management table 35. In the case of the above-described processing, a determination is made in Step S207 that the access processing cannot be executed since an unexecuted access process remains.

A case in which a status change flag 55 is provided will be explained. In a case where the status change flags 55 for all the leader access information 52A corresponding to a certain follower access information 52B and the leader access information 52A having a smaller sequence number is "No", and, in addition, the status change flags 55 for all the corresponding follower access information 52B are also "No", the determination in Step S207 may be YES. The likelihood of the condition in Step S207 being realized increases by managing the status change flag 55. Therefore, it is possible to reduce the frequency with which the execution of access processing is suspended.

Fig. 14 is a drawing showing an example of the processing flow for the external access execution part 38 to receive an external access request from the terminal 2.

The external access execution part 38 determines whether its own node is the leader or a follower (S301). The processing in a case where the own node is the leader will be explained (S301: Leader).

The external access execution part 38 receives an external access request 10 from the terminal 2 by way of the external communication I/F 14, and executes this request (S302).

The external access execution part 38 creates input information 60 including input data (S303).

The external access execution part 38 sends the created input information 60 to the followers 10B and 10C (S304).

The external access execution part 38 notifies the access execution part 36 of the input result (S305).

The processing in a case where the own node is a follower will be explained by returning to Step S301 (S301: Follower).

The external access execution part 38 receives the input information 60 from the leader (S306).

The external access execution part 38 reproduces the input result of the leader on the basis of the input information 60 (S307), and notifies the access execution part 36 of the reproduced input result (S305).

According to the above processing, it is possible for the followers to obtain the same input result as the leader, and for the tasks using the input result to perform the same operation.

Fig. 15 is a drawing showing an example of the processing flow for the external access execution part 38 to send output data to the terminal 2.

The external access execution part 38 stores output data in the output management table 39 (S401).

The external access execution part 38 determines whether its own node is the leader or a follower (S402).

First, the processing in a case where the own node is the leader will be explained (S402: Leader).

The external access execution part 38 sends the output information to the followers 10B and 10C (S403).

The external access execution part 38 receives output correctness information 80 from each follower (S404).

Then, the external access execution part 38 transfers the received output correctness information 80 to the output determination part 33 and has the output determination part 33 determine whether or not the output data is correct. The output determination part 33 respectively tabulates the number of pieces of output correctness information 80 for which the correctness flag 81 is "Correct" and the number of pieces of output correctness information 80 for which the correctness flag 81 is "Incorrect". Then, the output determination part 33 determines whether or not the number of "Correct" flags is a large number (for example, more than half) (S405).

In a case where this determination is "True" (S405: YES), the output determination part 33 returns a determination to the external access execution part 38 to the effect that the output data is correct. The external access execution part 38 receives this determination and sends the output data of the leader 10A to the terminal 2.

Alternatively, in a case where this determination is "False" (S405: NO), the output determination part 33 returns to the external access execution part 38 a determination to the effect that there is the likelihood that the leader 10A output data is incorrect. The external access execution part 38 receives this determination and does not send the output data executed by the leader 10A to the terminal 2. The leader 10A assumes that there is the likelihood that a failure of some sort has occurred in its own node, halts its own leader functions, and asks the followers to select a new leader (S407).

Next, the processing in a case where the own node is a follower will be explained by returning to Step S402 (S402: Follower).

The external access execution part 38 receives output information 70 from the leader (S408).

The external access execution part 38 has the output determination part 33 compare its own output data with the output data 70 received from the leader (S409).

The output determination part 33 determines whether or not the comparison results match (S410). In the case of a match (S410: YES), the output determination part 33 sends the leader 10A output correctness information 80 describing "Correct" in the correctness flag 81 (S411). Alternatively, in a case where these is no match (S410: NO), the output determination part 33 sends the leader 10A output correctness information 80 describing "Incorrect" in the correctness flag 81 (S412).

According to the above processing, it is possible to produce a more highly reliable output by comparing the output data of the follower with the output data of the leader.

### (Embodiment 2)

Embodiment 2 adds to Embodiment 1 processing for isolating the leader 10A and the follower 10B or 10C in which some sort of abnormality has occurred from the FT system 1.

Fig. 16 is a drawing showing an example of the data structure of follow feasibility information 90. The follow feasibility information 90 is information for communicating to the leader 10A whether or not a follower 10 is able to execute processing the same as the leader 10A (that is, is able to follow the leader 10A). The follow feasibility information 90, as shown in Fig. 16, for example, comprises a computer node identifier 52, a follow feasibility flag 91, and detailed follow feasibility information 92.

The follow feasibility flag 91 is a flag showing whether or not the follower 10 is able to follow the leader 10A. When following is able to be performed normally, "Yes" is described, and when following is not possible due to some sort of failure, "No" is described.

The detailed follow feasibility information 92 is for showing the access information 50 being followed. For example, the detailed follow feasibility information 92 may be a combination of the access target identifier 51, the task identifier 53, and the sequence number 54. The detailed follow feasibility information 92 may be information showing the reason that the follow feasibility flag 91 was "No".

Fig. 17 is a drawing showing an example of the access information management table 35 related to Embodiment 2. The follow determination part 34 of the leader 10A describes "Yes" in the item for the corresponding follow feasibility flag 91 of the access information management table 35 in a case where the follow feasibility flag 91 of the follow feasibility information 90 received from the follower is "Yes". Alternatively, when the follow feasibility information 90 is unable to be received, the follow determination part 34 does not describe anything in the item of the corresponding follow feasibility flag 91 of the access information management table 35. When the follow feasibility flag 91 is "No", the follow determination part 34 describes "No" in the item of the corresponding follow feasibility flag 91 of the access information management table 35. When there is a large number of "Yes" follow feasibility flags 91 (for example, more than half) in the same row of the access information management table 35, the follow determination part 34 of the leader 10A determines that there is the likelihood that some sort of failure has occurred in a follower that sent "No". The follow determination part 34 isolates this follower from the FT system 1. Alternatively, when there is a large number of "No" follow feasibility flags 91 (for example, more than half), the follow determination part 34 determines that there is the likelihood that some sort of failure has occurred in the leader itself. The follow determination part 34 halts the leader's functions and asks the followers to select a new leader.

Fig. 18 is a flowchart showing the processing of the follower access execution part 36 related to Embodiment 2.

The computer nodes 10 comprising the FT system 1 mutually check to make sure the operating system 30 is operating normally using a well-known means such as heartbeat. When there is no response from the leader 10A, the followers 10 send one another follow feasibility information 90 describing information to that effect in the detailed follow feasibility information 92.

The processing flow in Fig. 18 corresponds to the processing flow of S204 through S208 of Fig. 13. Accordingly, explanations of Steps S204 and S205 in Fig. 18 will be omitted, and the explanation will start from Step S220.

The access execution part 36 collates the oldest unexecuted access processes from the access information management table 35 (S220). The access execution part 36 compares the task identifier 53A of the leader access information 52A to the task identifier 53B of the follower access information 52B (S221).

In a case where the task identifiers 53 match (S221: YES), the access execution part 36 compares other items that are not dependent on other computer nodes 10, for example, the access target identifier 51, the status change flag 55, and the verification information 56 (S222).

In a case where the other items also match (S222: YES), the access execution part 36 determines that it is possible to follow the access of the leader, and sends follow feasibility information 90 having "Yes" in the follow feasibility flag 91 to the leader 10A (S223). The access execution part 36 includes the sequence number 54 and so forth of the leader 10A access information 50 in the detailed follow feasibility information 92. Thereafter, the access execution part 36 executes the flow from Step S208 of Fig. 13.

Alternatively, in a case where the other items do not match (S222: NO), the access execution part 36 sends follow feasibility information 90 having "No" in the follow feasibility flag 91 to the leader 10A (S227). Thereafter, the access execution part 36 executes the flow from Step S209 of Fig. 13.

Next, a case in which the task identifiers 53 do not match will be explained by returning to Step S221. In a case where the task identifiers 53 do not match (S221: NO), the access execution part 36 compares the access target identifiers 51 (S224).

In a case where the access target identifiers 51 match (S224: YES), the access execution part 36 determines whether or not the period of time during which the execution of the task request information 40 corresponding to its own access information 50 is being suspended exceeds a prescribed timeout period (S226). The determination may be made in accordance with whether or not the prescribed timeout period has elapsed since receiving the leader 10A access information 50.

In a case where the prescribed timeout period has elapsed (S226: YES), the access execution part 36 sends the leader follow feasibility information 90 having "No" in the follow feasibility flag (S227), and executes the processing flow from Step S209 of Fig. 13.

Alternatively, in a case where the prescribed timeout period has not elapsed (S226: NO), the access execution part 36 executes the processing flow from Step S209 of Fig. 13 as-is.

Next, a case in which the access target identifiers 51 do not match will be explained by returning to Step S224 (S224: NO). The access execution part 36 determines whether or not there is uncollated access information 50 (S225).

In a case where uncollated access information 50 exists (S224: YES), the access execution part 36 references the next access information 50 (S228) and returns to Step S205.

Alternatively, in a case where there is no uncollated access information 50 (S224: NO), the access execution part 36 advances to Step S226.

Fig. 19 is a drawing showing the processing flow for isolating a possibly failed computer node 10 from the FT system 1.

The leader 10A follow determination part 34 receives follow feasibility information 90 from each follower (S501). The follow determination part 34 respectively tabulates the number of followers having "Yes" and the number of followers having "No" in the follow feasibility flag 91 for a single access process (S502).

In a case where the number of followers having "Yes" in the follow feasibility flag 91 is a large number (for example, more than half) (S502: more "Yes"), there is the likelihood that a failure of some sort has occurred in the followers having "No" in the follow feasibility flag 91. Consequently, the leader 10A follow determination part 34 isolates these followers from the FT system 1 (S503).

Alternatively, in a case where the number of followers having "No" in the follow feasibility flag 91 is a large number (for example, more than half) (S502: more "No"), there is the likelihood that a failure of some sort has occurred in the leader 10A. Consequently, the leader 10A follow determination part 34 isolates the leader 10A itself from the FT system 1 and asks the followers to select a new leader (S504).

According to the above processing, it is possible to isolate a computer node 10 in which some sort of failure is likely to have occurred from the FT system 1. Then, the FT system 1 as a whole is able to continue performing processing correctly.

### (Embodiment 3)

In Embodiment 3, the followers do not perform the output correctness determination as in Embodiment 1, but rather the leader 10A performs the output correctness determination for the followers.

Fig. 20 is a drawing showing an example of the processing flow of an external access execution part related to Embodiment 3. First, the processing flow for the followers will be explained. Steps S401 through S402 are the same as the processing flow of Fig. 15, and as such, explanations will be omitted.

In a case where the own node is the follower (S402: Follower), the output data of the follower itself is described in the output information 70 and sent to the leader 10A (S421).

Next, a case in which the own node is the leader will be explained (S402: Leader). The leader 10A receives the output information 70 (S420). The output determination part 33 collates the output data of the followers with the leader's own output data (S422).

In a case where the output data of numerous followers (for example, more than half) is the same as that of the leader 10A (S423: YES), the output determination part 33 determines that the output data of the leader 10A is correct, and sends this output data to the terminal 2 (S406).

Alternatively, in a case where the output data of numerous followers (for example, more than half) is different (S423: NO), the output determination part 33 determines that there is the likelihood that a failure of some sort has occurred in the leader 10A itself. Consequently, the output determination part 33 halts the leader functions, and asks the followers to select a new leader (S407).

According to the above processing, the leader 10A need not send the output correctness information 80 to the followers as in the processing flow of Fig. 15. Therefore, it is possible to reduce the communication traffic between the computer nodes.

### (Embodiment 4)

Embodiment 4 uses the Yes/No of follow feasibility information 90 from the follower to verify the correctness of the leader 10A output.

Fig. 21 is a flowchart showing a leader 10A output correctness determination process related to Embodiment 4. Since the processing of Steps S600 through S602 is the same as that of Steps S500 through S502 of Fig. 19, explanations will be omitted.

The follow determination part 34 tabulates the follow feasibility flags 91 in the follow feasibility information 90, and in a case where the "Yes" follow feasibility flags 91 are numerous (S602: more "Yes"), determines that the output data of the leader 10A is correct and sends this output data to the terminal 2 (S603). For a follower for which "No" has been determined, the follow determination part 34 determines that there is the likelihood that a failure of some sort has occurred. Consequently, the follow determination part 34 isolates the follower from the FT system 1 (S604).

Alternatively, in a case where the "No" follow feasibility flags 91 are numerous (S602: more "No"), the follow determination part 34 determines that there is the likelihood that the output data of the leader 10A is incorrect and does not send the leader 10A output data to the terminal 2. The follow determination part 34 asks the followers to select a new leader, and, in addition, isolates the leader 10A, which is its own node, from the FT system 1 (S605).

In the above processing, since the followers need not send output information 70 to the leader 10A, it is possible to reduce the communication traffic between the computer nodes.

The embodiments of the present invention described hereinabove are examples for illustrating the present invention, and do not purport to limit the scope of the present invention solely to these embodiments. A person having ordinary skill in the art will be able to put the present invention into practice in a variety of other modes without departing from the gist of the present invention.

The present invention, for example, can be worded as follows.

A computer system that comprises multiple computer nodes, wherein one computer node from among the multiple computer nodes is a first computer node,
wherein the first computer node comprises:
an execution part for executing a prescribed request to create output data; and
an output determination part for querying another computer node as to whether or not the output data is correct, and upon obtaining responses to the effect correct from a prescribed number of other computer nodes, determining that the output data is correct.

The present invention, for example, may also be worded as follows.

A computer system that comprises multiple computer nodes, wherein one computer node from among the multiple computer nodes becomes a first computer node, and
other computer nodes besides the first computer node from among the multiple computer nodes become second computer nodes,
wherein each of the first computer node and the second computer nodes comprises:
an execution part for executing a prescribed process to create output data; and
an output determination part for determining whether or not the output is correct,
wherein the first computer node:
   in the execution part of its own node, executes a prescribed process to create a first output data; and
   in the output determination part of its own node, queries the second computer node as to whether or not the first output data is correct, and upon obtaining responses to the effect correct from a prescribed number of the second computer nodes, determines that the first output data is correct, and
   the second computer nodes:
      in the execution part of its own node, execute the same processing as the prescribed process executed by the first computer node to create a second output data; and
      in the output determination part of its own node, receive a query from the first computer node, determine whether or not the first output data and the second output data are the same result, and in a case where the determination result is affirmative, communicate a response to the effect that the first output data is correct to the first computer node.

### [Reference Signs List]

- 1: Fault tolerant system
- 2: Terminal
- 10: Computer node
- 10A: Leader
- 10B, 10C: Follower

## Claims

1. A computer system in which multiple computer nodes are coupled via a communication network, wherein
one computer node from among the multiple computer nodes becomes a leader computer node;
other computer nodes besides the leader computer node from among the multiple computer nodes become follower computer nodes,
each of the leader computer node and the follower computer nodes execute the same task, and
each of the leader computer node and the follower computer nodes comprises:
a communication interface part for communicating with other computer nodes via a computer network;
a storage part for storing data;
an access execution part for executing an access request for the storage part from a task; and
an output determination part for determining whether or not a result of an execution executed by the access execution part is correct, and wherein
the leader computer node:
in the access execution part of its own node, creates a first output data on the basis of a first access request requested from a first task; and
on the output determination part of its own node, queries the follower computer nodes as to whether or not the first output data is correct, and upon obtaining responses to the effect that the data is correct from a prescribed number of the follower computer nodes, determines that the first output data is correct, and wherein
the follower computer nodes:
in the access execution part of its own node, create a second output data on the basis of a second access request requested from a second task that performs the same processing as that of the first task; and
in the output determination part of its own node, receive a query from the leader computer node, determines whether or not the first output data and the second output data are the same data, and in a case where the determination result is affirmative, send a response to the effect that the first output data is correct to the leader computer node.

2. A computer system according to claim 1, wherein
the multiple computer nodes further comprise an external access execution part for receiving input data from an external apparatus via the communication interface part,
the leader computer node, in the external access execution part of its own node, sends the received input data to the follower computer nodes, and
the follower computer nodes, in the access execution part of its own node, notify the task of the input data received from the leader computer node.

3. A computer system according to claim 1 or 2, wherein, when the access execution part of the leader computer node executes multiple access requests in a prescribed sequence, the access execution part of the follower computer nodes executes an access request for performing the same processing as the access request executed by the access execution part of the leader computer node in the same sequence as the access execution node of the leader computer node.

4. A computer system according to claim 1 or 2, wherein the output determination part of the leader computer node determines that output data created by the access execution part of the leader computer node is correct upon obtaining responses to the effect that the output data is correct from more than half of the follower computer nodes.

5. A computer system according to claim 1, wherein
the multiple computer nodes further comprise a follow determination part for determining whether or not the access execution part of the follower computer nodes are able to execute the same processing as the access execution part of the leader computer node, and wherein
the follow determination part of the follower computer nodes determine whether or not an access request executed by the follower computer nodes has a corresponding relationship with any of the access requests executed by the leader computer node, and when the determination result is affirmative, sends to the leader computer node a notification to the effect that following is possible, and when the determination result is negative, sends to the leader computer node a notification to the effect that following is not possible.

6. A data processing method for a computer system in which multiple computer nodes are coupled via a communication network,
one computer node from among the multiple computer nodes becomes a leader computer node,
other computer nodes besides the leader computer node from among the multiple computer nodes become follower computer nodes, and
each of the leader computer node and the follower computer nodes execute the same task,
the method comprising, by means of the leader computer node:
a step of, in its own node, creating a first output data on the basis of a first access request requested from a first task; and
a step of, in its own node, querying the follower computer nodes as to whether or not the first output data is correct, and upon obtaining responses to the effect that the data is correct from a prescribed number of the follower computer nodes, determining that the first execution result is correct, and
by means of the follower computer nodes:
a step of, in its own node, creating a second output data on the basis of a second access request requested from a second task that performs the same processing as that of the first task; and
a step of, in its own node, receiving a query from the leader computer node, and determining whether or not the first output data and the second output data are the same data, and in a case where the determination result is affirmative, sending a response to the effect that the first output data is correct to the leader computer node.

7. A data processing program comprising computer executable instructions for carrying out the steps of method claim 6
wherein
the leader computer node is executing a computer program comprising:
a step of, in its own node, creating a first output data on the basis of a first access request requested from a first task; and
a step of, in its own node, querying the follower computer nodes as to whether or not the first output data is correct, and upon obtaining responses to the effect the data is correct from a prescribed number of the follower computer nodes, determining that the first execution result is correct, and
the follower computer nodes are executing a computer program comprising:
a step of, in its own node, creating a second output data on the basis of a second access request requested from a second task that performs the same processing as that of the first task; and
a step of, in its own node, receiving a query from the leader computer node, and determining whether or not the first output data and the second output data are the same data, and in a case where the determination result is affirmative, sending a response to the effect that the first output data is correct to the leader computer node.

## Patentansprüche

1. Computersystem, in dem mehrere Computerknoten über ein Kommunikationsnetz verbunden sind, wobei
ein Computerknoten unter den mehreren Computerknoten ein Führungs-Computerknoten wird,
andere, von dem Führungs-Computerknoten verschiedene Computerknoten unter den mehreren Computerknoten Folger-Computerknoten werden,
der Führungs-Computerknoten und die Folger-Computerknoten alle die gleiche Aufgabe ausführen, und
der Führungs-Computerknoten und die Folger-Computerknoten jeweils aufweisen:
einen Kommunikations-Schnittstellenabschnitt zum Kommunizieren mit anderen Computerknoten über ein Computernetz,
einen Speicherabschnitt zum Speichern von Daten,
einen Zugriffsausführungsabschnitt zum Ausführen einer Zugriffsanfrage für den Speicherabschnitt aus einer Aufgabe, und
einen Ausgabebestimmungsabschnitt zum Bestimmen, ob ein Ergebnis einer durch den Zugriffsausführungsabschnitt ausgeführten Ausführung korrekt ist, und wobei
der Führungs-Computerknoten
in dem Zugriffsausführungsabschnitt seines eigenen Knotens erste Ausgabedaten auf Basis einer ersten Zugriffsanfrage erzeugt, die aus einer ersten Aufgabe angefragt wurde, und
in dem Ausgabebestimmungsabschnitt seines eigenen Knotens die Folger-Computerknoten danach befragt, ob die ersten Ausgabedaten korrekt sind, und bei Erhalt von Antworten von einer vorgeschriebenen Anzahl von Folger-Computerknoten dahingehend, dass die Daten korrekt sind, bestimmt, dass die ersten Ausgabedaten korrekt sind, und wobei
die Folger-Computerknoten
in dem Zugriffsausführungsabschnitt ihres eigenen Knotens zweite Ausgabedaten auf Basis einer zweiten Zugriffsanfrage erzeugen, die aus einer zweiten Aufgabe angefragt wurde, die die gleiche Verarbeitung wie die erste Aufgabe ausführt, und
in dem Ausgabebestimmungsabschnitt ihres eigenen Knotens eine Abfrage aus dem Führungs-Computerknoten empfangen, bestimmen, ob die ersten Ausgabedaten und die zweiten Ausgabedaten die gleichen Daten sind, und, falls das Ergebnis dies bestätigt, eine Antwort dahingehend an den Führungs-Computerknoten senden, dass die ersten Ausgabedaten korrekt sind.

2. Computersystem nach Anspruch 1, wobei
die mehreren Computerknoten ferner einen Externzugriffs-Ausführungsabschnitt zum Empfangen von Eingabedaten aus einem externen Gerät über den Kommunikations-Schnittstellenabschnitt aufweisen,
der Führungs-Computerknoten in dem Externzugriffs-Ausführungsabschnitt seines eigenen Knotens die empfangenen Eingabedaten zu den Folger-Computerknoten sendet, und
die Folger-Computerknoten in dem Zugriffsausführungsabschnitt ihres eigenen Knotens die Aufgabe über die Eingabedaten unterrichtet, die aus dem Führungs-Computerknoten empfangen wurden.

3. Computersystem nach Anspruch 1 oder 2, wobei, wenn der Zugriffsausführungsabschnitt des Führungs-Computerknotens mehrere Zugriffsanfragen in einer vorbestimmten Reihenfolge ausführt, der Zugriffsausführungsabschnitt der Folger-Computerknoten eine Zugriffsanfrage ausführt, um die gleiche Verarbeitung wie die Zugriffsanfrage, die durch den Zugriffsausführungsabschnitt des Führungs-Computerknotens ausgeführt wurde, in der gleichen Reihenfolge auszuführen wie der Zugriffsausführungsknoten des Führungs-Computerknotens.

4. Computersystem nach Anspruch 1 oder 2, wobei der Ausgabebestimmungsabschnitt des Führungs-Computerknotens bestimmt, dass Ausgabedaten, die durch den Zugriffsausführungsabschnitt des Führungs-Computerknotens erzeugt wurden, korrekt sind, wenn Antworten von mehr als der Hälfte der Folger-Computerknoten dahingehend erhalten wurden, dass die Ausgabedaten korrekt sind.

5. Computersystem nach Anspruch 1, wobei
die mehreren Computerknoten ferner einen Folger-Bestimmungsabschnitt aufweisen, um zu bestimmen, ob der Zugriffsausführungsabschnitt der Folger-Computerknoten dazu in der Lage ist, die gleiche Verarbeitung auszuführen wie der Zugriffsausführungsabschnitt des Führungs-Computerknotens, und wobei
der Folger-Bestimmungsabschnitt der Folger-Computerknoten bestimmt, ob eine Zugriffsanfrage, die durch die Folger-Computerknoten ausgeführt wurde, eine entsprechende Beziehung mit einer der Zugriffsanfragen aufweist, die durch den Führungs-Computerknoten ausgeführt werden, und wenn das Bestimmungsergebnis dies bestätigt, zu dem Führungs-Computerknoten eine Mitteilung dahingehend sendet, dass ein Folgen möglich ist, und wenn das Bestimmungsergebnis negativ ist, zu dem Führungs-Computerknoten eine Mitteilung dahingehend sendet, dass ein Folgen nicht möglich ist.

6. Datenverarbeitungsverfahren für ein Computersystem, in dem mehreren Computerknoten über ein Kommunikationsnetz verbunden sind, wobei
ein Computerknoten unter den mehreren Computerknoten ein Führungs-Computerknoten wird,
andere, von dem Führungs-Computerknoten verschiedene Computerknoten unter den mehreren Computerknoten Folger-Computerknoten werden, und
der Führungs-Computerknoten und die Folger-Computerknoten alle die gleiche Aufgabe ausführen,
wobei in den Schritten des Verfahren mittels des Führungs-Computerknotens
in seinem eigenen Knoten erste Ausgabedaten auf Basis einer ersten Zugriffsanfrage erzeugt werden, die aus einer ersten Aufgabe angefragt wurde, und
in seinem eigenen Knoten die Folger-Computerknoten danach befragt werden, ob die ersten Ausgabedaten korrekt sind, und bei Erhalt von Antworten von einer vorgeschriebenen Anzahl von Folger-Computerknoten dahingehend, dass die Daten korrekt sind, bestimmt wird, dass die ersten Ausgabedaten korrekt sind, und
mittels der Folger-Computerknoten
in ihrem eigenen Knoten zweite Ausgabedaten auf Basis einer zweiten Zugriffsanfrage erzeugt werden, die aus einer zweiten Aufgabe angefragt wurde, die die gleiche Verarbeitung wie die erste Aufgabe ausführt, und
in ihrem eigenen Knoten eine Abfrage aus dem Führungs-Computerknoten empfangen wird, und bestimmt wird, ob die ersten Ausgabedaten und die zweiten Ausgabedaten die gleichen Daten sind, und, falls das Ergebnis dies bestätigt, eine Antwort dahingehend an den Führungs-Computerknoten gesendet wird, dass die ersten Ausgabedaten korrekt sind.

7. Datenverarbeitungsprogramm mit computerausführbaren Befehlen zum Ausführen der Schritte des Verfahrensanspruchs 6, wobei
der Führungs-Computerknoten ein Computerprogramm ausführt, in dem
in seinem eigenen Knoten erste Ausgabedaten auf Basis einer ersten Zugriffsanfrage erzeugt werden, die aus einer ersten Aufgabe angefragt wurde, und
in seinem eigenen Knoten die Folger-Computerknoten danach befragt werden, ob die ersten Ausgabedaten korrekt sind, und bei Erhalt von Antworten von einer vorgeschriebenen Anzahl von Folger-Computerknoten dahingehend, dass die Daten korrekt sind, bestimmt wird, dass die ersten Ausgabedaten korrekt sind, und
die Folger-Computerknoten ein Computerprogramm ausführen, in dem
in ihrem eigenen Knoten zweite Ausgabedaten auf Basis einer zweiten Zugriffsanfrage erzeugt werden, die aus einer zweiten Aufgabe angefragt wurde, die die gleiche Verarbeitung wie die erste Aufgabe ausführt, und
in ihrem eigenen Knoten eine Abfrage aus dem Führungs-Computerknoten empfangen wird, und bestimmt wird, ob die ersten Ausgabedaten und die zweiten Ausgabedaten die gleichen Daten sind, und, falls das Ergebnis dies bestätigt, eine Antwort dahingehend an den Führungs-Computerknoten gesendet wird, dass die ersten Ausgabedaten korrekt sind.

## Revendications

1. Système informatique dans lequel de multiples noeuds informatiques sont couplés via un réseau de communication, dans lequel
un noeud informatique parmi les multiples noeuds informatiques devient un noeud informatique leader,
d'autres noeuds informatiques au-dessous du noeud informatique leader parmi les multiples noeuds informatiques deviennent des noeuds informatiques suiveurs,
chacun du noeud informatique leader et des noeuds informatiques suiveurs exécutent la même tâche, et
chacun du noeud informatique leader et des noeuds informatiques suiveurs comporte :
une partie d'interface de communication pour communiquer avec d'autres noeuds informatiques via un réseau informatique,
une partie de mémorisation pour mémoriser des données,
une partie d'exécution d'accès pour exécuter une demande d'accès pour la partie de mémorisation à partir d'une tâche, et
une partie de détermination de sortie pour déterminer si oui ou non un résultat d'une exécution exécutée par la partie d'exécution d'accès est correct, et dans lequel
le noeud informatique leader :
dans la partie d'exécution d'accès de son propre noeud, crée une première donnée de sortie sur la base d'une première demande d'accès demandée par une première tâche, et
sur la partie de détermination de sortie de son propre noeud, interroge les noeuds informatiques suiveurs pour savoir si oui ou non la première donnée de sortie est correcte, et lors de l'obtention de réponses indiquant que la donnée est correcte en provenance d'un nombre prescrit de noeuds informatiques suiveurs, détermine que la première donnée de sortie est correcte, et dans lequel les noeuds informatiques suiveurs :
dans la partie d'exécution d'accès de leur propre noeud, créent une seconde donnée de sortie sur la base d'une seconde demande d'accès demandée par une seconde tâche qui exécute le même traitement que celui de la première tâche, et
dans la partie de détermination de sortie de leur propre noeud, reçoivent une requête en provenance du noeud informatique leader, déterminent si oui ou non la première donnée de sortie et la seconde donnée de sortie sont la même donnée, et dans le cas où le résultat de la détermination est affirmatif, envoient une réponse indiquant que la première donnée de sortie est correcte au noeud informatique leader.

2. Système informatique selon la revendication 1, dans lequel
les multiples noeuds informatiques comportent en outre une partie d'exécution d'accès externe pour recevoir des données d'entrée en provenance d'un appareil externe via la partie d'interface de communication,
le noeud informatique leader, dans la partie d'exécution d'accès externe de son propre noeud, envoie les données d'entrée reçues aux noeuds informatiques suiveurs, et
les noeuds informatiques suiveurs, dans la partie d'exécution d'accès de leur propre noeud, notifient à la tâche les données d'entrée reçues en provenance du noeud informatique leader.

3. Système informatique selon la revendication 1 ou 2, dans lequel, lorsque la partie d'exécution d'accès du noeud informatique leader exécute de multiples demandes d'accès dans une séquence prescrite, la partie d'exécution d'accès des noeuds informatiques suiveurs exécute une demande d'accès pour exécuter le même traitement que la demande d'accès exécutée par la partie d'exécution d'accès du noeud informatique leader dans la même séquence que le noeud d'exécution d'accès du noeud informatique leader.

4. Système informatique selon la revendication 1 ou 2, dans lequel la partie de détermination de sortie du noeud informatique leader détermine que des données de sortie créées par la partie d'exécution d'accès du noeud informatique leader sont correctes lors de l'obtention de réponses indiquant que les données de sortie sont correctes en provenance de plus de la moitié des noeuds informatiques suiveurs.

5. Système informatique selon la revendication 1, dans lequel
les multiples noeuds informatiques comportent en outre une partie de détermination de suivi pour déterminer si oui ou non la partie d'exécution d'accès des noeuds informatiques suiveurs est capable d'exécuter le même traitement que la partie d'exécution d'accès du noeud informatique leader, et dans lequel
la partie de détermination de suivi des noeuds informatiques suiveurs détermine si oui ou non une demande d'accès exécutée par les noeuds informatiques suiveurs a une relation de correspondance avec l'une quelconque des demandes d'accès exécutées par le noeud informatique leader, et lorsque le résultat de la détermination est affirmatif, envoie au noeud informatique leader une notification indiquant que le suivi est possible, et lorsque le résultat de la détermination est négatif, envoie au noeud informatique leader une notification indiquant que le suivi n'est pas possible.

6. Procédé de traitement de données pour un système informatique dans lequel de multiples noeuds informatiques sont couplés via un réseau de communication,
un noeud informatique parmi les multiples noeuds informatiques devient un noeud informatique leader,
d'autres noeuds informatiques au-dessous du noeud informatique leader parmi les multiples noeuds informatiques deviennent des noeuds informatiques suiveurs, et
chacun du noeud informatique leader et des noeuds informatiques suiveurs exécutent la même tâche,
le procédé comportant, par l'intermédiaire du noeud informatique leader :
une étape consistant à, dans son propre noeud, créer une première donnée de sortie sur la base d'une première demande d'accès demandée par une première tâche, et
une étape consistant à, dans son propre noeud, interroger les noeuds informatiques suiveurs pour savoir si oui ou non la première donnée de sortie est correcte, et lors de l'obtention de réponses indiquant que la donnée est correcte en provenance d'un nombre prescrit des noeuds informatiques suiveurs, déterminer que le premier résultat d'exécution est correct, et par l'intermédiaire des noeuds informatiques suiveurs :
une étape consistant à, dans son propre noeud, créer une seconde donnée de sortie sur la base d'une seconde demande d'accès demandée par une seconde tâche qui exécute le même traitement que celui de la première tâche, et
une étape consistant à, dans son propre noeud, recevoir une requête en provenance du noeud informatique leader, et déterminer si oui ou non la première donnée de sortie et la seconde donnée de sortie sont la même donnée, et dans le cas où le résultat de la détermination est affirmatif, envoyer une réponse indiquant que la première donnée de sortie est correcte au noeud informatique leader.

7. Programme de traitement de données comportant des instructions exécutables par ordinateur pour mettre en oeuvre les étapes du procédé de la revendication 6,
dans lequel le noeud informatique leader exécute un programme informatique comportant :
une étape consistant à, dans son propre noeud, créer une première donnée de sortie sur la base d'une première demande d'accès demandée par une première tâche, et
une étape consistant à, dans son propre noeud, interroger les noeuds informatiques suiveurs pour savoir si ou non la première donnée de sortie est correcte, et
lors de l'obtention de réponses indiquant que la donnée est correcte en provenance d'un nombre prescrit des noeuds informatiques suiveurs, déterminer que le premier résultat d'exécution est correct, et
les noeuds informatiques suiveurs exécutent un programme informatique comportant :
une étape consistant à, dans leur propre noeud, créer une seconde donnée de sortie sur la base d'une seconde demande d'accès demandée par une seconde tâche qui exécute le même traitement que celui de la première tâche, et
une étape consistant à, dans leur propre noeud, recevoir une requête en provenance du noeud informatique leader, et déterminer si oui ou non la première donnée de sortie et la seconde donnée de sortie sont la même donnée, et dans le cas où le résultat de la détermination est affirmatif, envoyer une réponse indiquant que la première donnée de sortie est correcte au noeud informatique leader.
